# EUROPÄISCHE PATENTANMELDUNG

(11) **EP 2 161 470 A2**
(43) Veröffentlichungstag der Anmeldung: **10.03.2010**
(21) Anmeldenummer: 09010702.0
(22) Anmeldetag: 20.08.2009
(51) Int. Cl.: F16D 43/16, F16D 43/18

(54) **Fliehkraftkupplung**

(30) Priorität: 04.09.2008 AT 13732008
(71) Anmelder: Miba Sinter Austria GmbH, 4663 Laakirchen (AT)
(72) Erfinder: Pamminger, Helmut, 4840 Vöcklabruck (AT)
(74) Vertreter: Ofner, Clemens

(57) **Zusammenfassung**

Die Erfindung betrifft eine Fliehkraftkupplung (1) zur Herstellung bzw. Unterbrechung einer Wirkverbindung zwischen einem Aggregat einer Maschine und einer angetriebenen Welle (6), mit einem Kupplungskörper (3), der einen äußeren Kupplungsteil (4) und einen inneren, mit der angetriebenen Welle (6) drehfest verbindbaren Kupplungsteil (5) umfasst, wobei der äußere Kupplungsteil (4) den inneren Kupplungsteil (5) zumindest teilweise umgibt, und der äußere Kupplungsteil (4) mit einer weiteren Welle zum Antrieb des Aggregats verbindbar ist, wobei am inneren Kupplungsteil (4) zumindest ein Fliehgewicht (10, 11) angeordnet ist. Zwischen dem äußeren Kupplungsteil (4) und dem inneren Kupplungsteil (5) und/oder zwischen dem äußeren Kupplungsteil (4) und zumindest teilweise dem zumindest einen Fliehgewicht (10, 11) ist ein Wälzlager (8) mit Wälzkörpern (9) angeordnet.

## Beschreibung

Die Erfindung betrifft eine Fliehkraftkupplung zur Herstellung bzw. Unterbrechung einer Wirkverbindung zwischen einem Aggregat einer Maschine und einer angetriebenen Welle, mit einem Kupplungskörper, der einen äußeren Kupplungsteil und einen inneren, mit der angetriebenen Welle drehfest verbindbaren Kupplungsteil umfasst, wobei der äußere Kupplungsteil den inneren Kupplungsteil zumindest teilweise umgibt, und der äußere Kupplungsteil mit einer weiteren Welle zum Antrieb des Aggregats verbindbar ist, wobei am inneren Kupplungsteil zumindest ein Fliehgewicht angeordnet ist, sowie eine Brennkraftmaschine mit einer Kurbelwelle und mindestens einer von der Kurbelwelle angetriebenen weiteren Welle.

Es ist aus dem Stand der Technik bekannt, dass durch die Verlagerung des Schwerpunktes von Kolben sowie von Pleuel eines Kurbeltriebes einer Brennkraftmaschine Massenkräfte auftreten. Zur Kompensierung dieser Massenkräfte sind so genannte Ausgleichswellen vorgesehen, die insbesondere bei höheren Drehzahlen zugeschaltet werden. Es können damit Vibrationen bzw. Betriebsgeräusche vermindert bzw. beseitigt werden. Derartige Ausgleichswellen werden zumeist durch Umschlingungstriebe angetrieben und laufen synchron zur Kurbelwelle. Es gibt aber auch Ausführungen bei denen zwei Ausgleichswellen verwendet werden die gegenläufig und beispielsweise mit der doppelten Drehzahl der Kurbelwelle angetrieben werden.

Bekannte Ausgleichswellen arbeiten mit zusätzlichen Steuerungen bzw. Regelungen. Damit ist ein zusätzlicher Aufwand verbunden und ist zusätzlicher Bauraum für diese Regelungs- bzw. Steuerungsanlagen erforderlich.

Der vorliegenden Erfindung liegt die Aufgabe zugrunde, eine Kupplung für die Zuschaltung eines Aggregates an eine Maschine zu schaffen, insbesondere eine Ausgleichswelle zu einer Kurbelwelle einer Brennkraftmaschine, die keine gesonderte Regelung bzw. Steuerung erfordert.

Diese Aufgabe der Erfindung wird jeweils eigenständig durch die eingangs genannte Fliehkraftkupplung sowie die Brennkraftmaschine, die mit dieser Fliehkraftkupplung ausgestattet ist, gelöst, wobei zwischen dem äußeren Kupplungsteil und dem inneren Kupplungsteil und/oder zwischen dem äußeren Kupplungsteil und zumindest teilweise dem zumindest einen Fliehgewicht ein Wälzlager mit Wälzkörpern angeordnet ist.

Es wird damit eine rein mechanisch arbeitende Kupplung zur Verfügung gestellt, sodass keine weiteren Aggregate, wie Steuerungen oder Regelungen oder Hydraulikversorgungen zur Betätigung der Kupplung, erforderlich sind. Drehzahlabhängig werden die Fliehgewichte mit höherer Drehzahl aufgrund der auftretenden Fliehkraft nach außen gegen die Wälzkörper oder den äußeren Kupplungsteil bewegt. In der Folge wird der innere Kupplungsteil aufgrund der auftretenden Reibungskräfte abgebremst bzw. der äußere Kupplungsteil beschleunigt, sodass die Drehzahl des inneren Kupplungsteils verringert bzw. des äußeren erhöht wird und eine Kupplung mit dem äußeren Kupplungsteil ermöglicht wird, wenn die Drehzahldifferenz zwischen diesen beiden Kupplungsteilen zumindest annähernd Null ist. Die Abbremsung bzw. Beschleunigung selbst erfolgt dabei zumindest teilweise über die Wälzkörper, wodurch die mechanische Belastung der Kupplung reduziert werden kann und insbesondere auch der Kupplungsvorgang selbst damit harmonischer und nicht ruckartig verläuft. Die gewünschte Drehzahl, ab der die Zuschaltung von Nebenaggregaten über diese Kupplung erfolgt, kann zumindest teilweise über das Gewicht der Fliehgewichte eingestellt werden. Die erfindungsgemäße Kupplung hat somit den Vorteil einer robusten einfachen Ausführung, wobei die mechanische Belastung aufgrund des Abrollmechanismus des Wälzlagers reduziert werden kann.

Zur Steigerung der Effizienz des Kupplungsvorganges ist es von Vorteil, wenn das zumindest eine Fliehgewicht auf der den Wälzkörpern zugewandten Oberfläche eine Bremsrampe aufweist, womit die Reibwirkung erhöht werden kann. Insbesondere kann über die Neigung der Rampe gegen die Wälzkörper auch die Geschwindigkeit der Beschleunigung des äußeren Kupplungsteils bzw. der Abbremsung des inneren Kupplungsteils während des Kupplungsvorganges beeinflusst werden.

Es sei an dieser Stelle erwähnt, dass primär eine Beschleunigung des äußeren Kupplungsteils stattfindet, jedoch eine geringfügige Abbremsung des inneren Kupplungsteils nicht ausgeschlossen werden kann. Es ist daher, wenn im Folgenden von der Beschleunigung des äußeren Kupplungsteils gesprochen wird, eine mögliche Abbremsung des inneren Kupplungsteils mitzulesen.

Es ist dabei möglich, dass sich die Bremsrampe nur über einen Teilbereich der den Wälzkörpern zugewandten Oberfläche erstreckt, um die mechanische Belastung der Fliehgewichte sowie der Wälzkörper während des Einkuppelns zu verringern, wodurch die Standzeit der Kupplung verlängert werden. Die Effektivität der Kupplung wird damit überraschender Weise trotz der verringerten Reibfläche nicht wesentlich negativ beeinflusst.

Gemäß einer Ausführungsvariante der Erfindung ist vorgesehen, dass der äußere Kupplungsteil in einer dem inneren Kupplungsteil zugewandten Oberfläche eine Nut mit Nutseitenwänden aufweist, wobei zumindest eine Nutseitenwand zumindest in einem Abschnitt schräg nach außen verläuft, bezogen auf den Nutengrund, und das Fliehgewicht eine zum Abschnitt komplementäre Rampe aufweist, die drehzahlabhängig im Eingriff mit dem Abschnitt bringbar ist. Durch die Nut wird einerseits eine verbesserte Halterung der Wälzkörper ermöglicht, andererseits wird durch den drehzahlabhängigen Eingriff der Rampe des Fliehgewichts in den schräg nach außen verlaufenden Abschnitt der Nutseitenwand während der Beschleunigung des äußeren Kupplungsteils durch das Fliehgewicht diesem eine bessere Führung verliehen, sodass auch höhere Kräfte übertragbar sind.

Es besteht weiters die Möglichkeit, dass das Fliehgewicht zumindest teilweise zwischen dem inneren Kupplungsteil und den Wälzkörpern angeordnet ist, sodass eine direkte Kraftübertragung vom Fliehgewicht auf den äußeren Kupplungsteil ermöglicht wird, wodurch eine zumindest teilweise Trennung zwischen der Rollenlagerung und der die Drehzahl verringernden Reibungskräfte erreicht werden kann.

Das Fliehgewicht kann in einer dem inneren Kupplungsteil zugewandten Oberfläche eine Führungsnut und der innere Kupplungsteil einen dazu komplementären Steg, der in die Führungsnut eingreift, aufweisen, womit eine bessere Seitenführung des Fliehgewichtes erreicht werden kann.

Zur Reduzierung der Flächenbelastung bzw. zur Erhöhung der auftretenden Reibkräfte kann das Fliehgewicht eine Bremsfläche aufweisen, die dem äußeren Kupplungsteil zugewandt und drehzahlabhängig im Wirkverbindung mit dem äußeren Kupplungsteil bringbar ist.

Eine einfache drehbewegliche Lagerung des Fliehgewichtes am inneren Kupplungsteil wird dadurch erreicht, wenn das Fliehgewicht auf einer dem inneren Kupplungsteil zugewandten Oberfläche eine nockenartigen Vorsprung aufweist und im inneren Kupplungsteil zur Aufnahme dieses nockenartigen Vorsprungs eine dazu entsprechende Vertiefung ausgebildet ist.

Das Fliehgewicht kann gegen die Fliehkraft vorgespannt sein, wodurch einerseits eine Einstellmöglichkeit für die gewünschte Drehzahl für die Einkupplung erreicht wird und andererseits es damit möglich wird, dass bei sinkender Drehzahl der angetriebenen Welle die Entkupplung und damit die Abschaltung des Aggregats, welches über die erfindungsgemäße Kupplung zugeschaltet werden kann, rascher erfolgt.

Zur Erhöhung der Effektivität der Kupplung können mehrere Fliehgewichte in axialer Richtung angeordnet sein, insbesondere beidseits des inneren Kupplungsteils.

An dem äußeren Kupplungsteil kann ein Mitnehmerelement angeordnet sein, wobei am inneren Kupplungsteil zumindest eine Sperrklinke angelenkt ist, die mit diesem Mitnehmerelement drehzahlabhängig in Eingriff bringbar ist. Es wird damit eine konstruktiv einfache Möglichkeit für die Übertragung der Antriebskraft vom inneren Kupplungsteil in den äußeren Kupplungsteil und damit in die mit diesem Kupplungsteil verbundene Welle erreicht.

Von Vorteil ist es dabei wenn die Sperrklinke an einer der Mitnehmerelemente zugewandten Oberfläche einen Verriegelungsvorsprung aufweist, der in eine entsprechende Ausnehmung am Mitnehmerelement eingreifen kann, da damit eine bessere Wirkverbindung zwischen dem Mitnehmerelement und der Sperrklinke herstellbar ist.

Dieser Verriegelungsvorsprung kann sich dabei nur über einen Teilbereich der Breite der Sperrklinke erstrecken, wodurch eine kompaktere Bauweise der Kupplung erreicht wird.

Zur Herstellung einer bestimmbaren Phasenbeziehung zwischen den beiden Kupplungsteilen, d.h. einer bestimmten Position dieser beiden Kupplungsteile zueinander, kann zumindest ein Fliehgewicht angeordnet sein, das mit den Wälzkörpern und/oder dem Mitnehmerelement und, damit dem äußeren Kupplungsteil drehzahlabhängig in Reibkontakt bringbar ist.

Weiters besteht die Möglichkeit, dass das oder die Fliehgewichte und/oder die Sperrklinke mit einem Reibbelag versehen sind, um damit die erzielten Reibkräfte zu erhöhen, wodurch der Kupplungsvorgang verkürzt werden kann bzw. ist es damit auch möglich, Fliehgewichte mit geringerem Gewicht zu verwenden.

Zum besseren Verständnis der Erfindung wird diese anhand der nachfolgenden Figuren näher erläutert.

Es zeigen jeweils in schematisch vereinfachter Darstellung:
- Fig. 1: eine Fliehkraftkupplung in Seitenansicht;
- Fig. 2: die Fliehkraftkupplung nach Fig. 1 in Seitenansicht ohne Mitnehmerelement;
- Fig. 3: eine Ausführungsvariante eines Mitnehmerelementes in Seitenansicht;
- Fig. 4: ein Detail der Fliehkraftkupplung im Bereich der Fliehgewichte;
- Fig. 5: einen Ausschnitt aus einer Fliehkraftkupplung mit einer Ausführungsvariante der Fliehgewichte;
- Fig. 6: das Detail der Fliehkraftkupplung im Bereich der Sperrklinke;
- Fig. 7: die Sperrklinke nach Fig. 6 in Seitenansicht;
- Fig. 8: die Sperrklinke nach Fig. 6 in perspektivischer Darstellung;
- Fig. 9: eine Ausführungsvariante einer Sperrklinke in Seitenansicht;
- Fig. 10: die Sperrklinke nach Fig. 9 in perspektivischer Darstellung;
- Fig. 11: ein Fliehgewicht in Seitenansicht;
- Fig. 12: das Fliehgewicht in perspektivischer Darstellung;
- Fig. 13: einen Ausschnitt aus einer Fliehkraftkupplung mit einer Ausführungsvariante der Fliehgewichte;
- Fig. 14: einen Ausschnitt aus einer Ausführungsvariante einer Fliehkraftkupplung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer untere Grenze von 1 oder größer und enden bei einer oberen Grenze von 10 oder weniger, z.B. 1 bis 1,7, oder 3,2 bis 8,1 oder 5,5 bis 10.

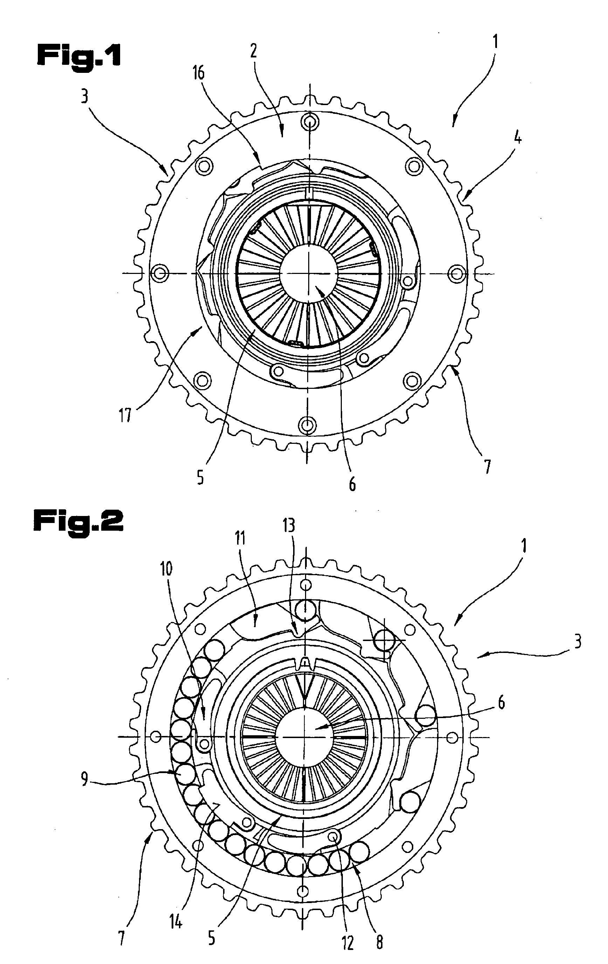

Die Fig. 1 und 2 zeigen eine Fliehkraftkupplung 1 jeweils in Seitenansicht, wobei in Fig. 1 ein seitliches Abdeckelement 2 angeordnet ist, das in Fig. 2 nicht dargestellt ist, um einen besseren Einblick in die Komponenten der Fliehkraftkupplung 1 zu erhalten.

Die Fliehkraftkupplung 1 dient zur Herstellung bzw. Unterbrechung einer Wirkverbindung zwischen einem nicht dargestellten Aggregat einer Maschine und einer ebenfalls nicht dargestellten angetriebenen Welle. Beispielsweise dient diese Fliehkraftkupplung 1 zur Zu- oder Abschaltung von Ausgleichswellen. Generell können damit Nebenaggregate einer Maschine, wie z.B. auch eine Pumpe, zugeschaltet werden.

Die Fliehkraftkupplung 1 weist einen Kupplungskörper 3 auf, der einen ersten äußeren Kupplungsteil 4 und einen zweiten inneren Kupplungsteil 5 aufweist, wobei der innere Kupplungsteil 5 zumindest teilweise innerhalb des äußeren Kupplungsteils 4 angeordnet ist.
Dieser innere Kupplungsteil 5 ist mit der angetriebenen Welle 6 drehfest verbunden, von der die Antriebskraft über die Fliehkraftkupplung 1 auf eine nicht dargestellte weitere Welle, und damit auf das weitere Aggregat bzw. Nebenaggregat übertragen wird.

Bei dieser Ausführungsvariante der Erfindung ist der äußere Kupplungsteil 4 zur Übertragung der Antriebskraft auf das weitere Aggregat als Zahnrad 7 ausgebildet, welches in Eingriff bringbar ist mit einem Zahnriemen. Generell sind aber auch andere Umschlingungstriebe, wie z.B. Kettenantriebe oder dgl., zur Übertragung der Antriebskraft möglich, weswegen die in den Fig. 1 und 2 dargestellte Zahnform nicht beschränkend für die Erfindung ist. Neben Umschlingungstrieben können aber auch Zahnradantriebe oder dgl. für die Wirkverbindung mit der anzutreibenden Welle verwendet werden.

Wie besser aus Fig. 2 ersichtlich ist, ist zwischen dem äußeren Kupplungsteil 4 und dem inneren Kupplungsteil 5 ein Wälzlager 8 angeordnet, welches Wälzkörper 9 aufweist. In der bevorzugten Ausführung ist das Wälzlager 8 in Form eines Rollenlagers ausgebildet, wobei die Wälzkörper 9 durch die Rollen gebildet werden. Es sind aber auch andere Ausführungen von Wälzlagern 8, bspw. Kugellagerungen, möglich und sind in diesem Fall die im nachfolgenden beschriebenen Wirkkomponenten der Fliehkraftkupplung 1, insbesondere die Gewichte, entsprechen anzupassen.

Der innere Kupplungsteil 5 ist mit Fliehgewichten 10, 11 ausgestattet, die über Schwenklager 12, 13 verschwenkbar am inneren Kupplungsteil 5 angeordnet sind.

Obwohl in der bevorzugten Ausführungsvariante zwei Arten von Fliehgewichten 10, 11 angeordnet sind, wie dies nachstehend noch näher erläutert wird, besteht im Rahmen der Erfindung selbstverständlich die Möglichkeit, dass nur eine Art dieser Fliehgewichte 10, 11 in der Fliehkraftkupplung 1 angeordnet wird.

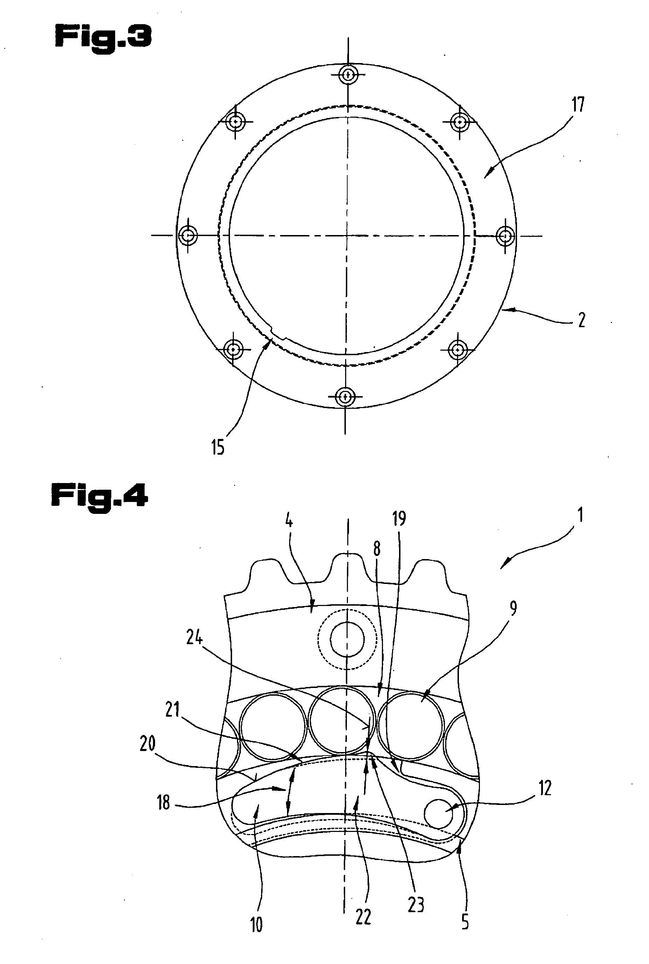

Die Fliehgewichte 10, 11 dienen dazu, um drehzahlabhängig eine Wirkverbindung zwischen der Welle 6 über den inneren Kupplungsteil 5 und den äußeren Kupplungsteil 4 mit einer anzutreibenden Welle und damit die Übertragung der Antriebsenergie zu ermöglichen. Durch die schwenkbewegliche Lagerung werden die Fliehgewichte 10, 11 ab einer vorbestimmbaren Drehzahl soweit nach außen gegen die Wälzkörper 9 durch die auftretenden Fliehkräfte verschwenkt, dass dem Abrollmechanismus des Wälzlagers 8 ein größerer Widerstand entgegengesetzt wird und sich somit die vorhandene Drehzahldifferenz zwischen dem äußeren und dem inneren Kupplungsteil 4, 5 angeglichen wird. Mit steigender Drehzahl erhöht sich der Widerstand und die Drehzahldifferenz verringert sich weiter, bis bei zumindest annähernd nahezu gleicher Drehzahl der beiden Kupplungsteile 4, 5 ein Sperrelement die mechanische Verbindung zwischen den beiden Kupplungsteilen 4, 5 herstellt. In der bevorzugten Ausführungsform ist dieses Sperrelement in Form einer Sperrklinke 14 ausgebildet, die in eine entsprechende Ausnehmung 15 (Fig. 3) oder eine Hinterschneidung 16 (Fig. 1) des Abdeckelementes 2 eingreift, wodurch dieses Abdeckelement 2 als Mitnehmerelement 17 fungiert.

Selbstverständlich besteht im Rahmen der Erfindung die Möglichkeit, anstelle der Ausbildung des Abdeckelementes 2 als Mitnehmerelement 17 ein gesondertes Mitnehmerelement 17 vorzusehen, jedoch bietet diese Kombination die Möglichkeit eines einfacheren Aufbaus.

Das Abdeckelement 2 bzw. das Mitnehmerelement 17 selbst ist mit dem äußeren Kupplungsteil 4 drehfest verbunden, insbesondere mit diesem verschraubt, wobei auch andere Verbindungsmethoden, wie z.B. Verschweißen etc. möglich sind.

Fig. 4 zeigt ein Detail der Fliehkraftkupplung 1 im Bereich des Fliehgewichtes 10. Wie bereits voranstehend erläutert ist dieses Fliehgewicht 10 über das Schwenklager 12 am inneren Kupplungsteil 5 angelenkt, sodass dieses Fliehgewicht 10 entsprechend Doppelpfeil 18 drehbeweglich von dem inneren Kupplungsteil 5 gehaltert ist. Zwischen dem äußeren Kupplungsteil 4 und dem inneren Kupplungsteil 5 ist das Wälzlager 8 mit den Wälzkörpern 9 angeordnet, sodass also im entkuppelten Zustand, d. h. bei niedriger Drehzahl der Welle 6, der angetriebene innere Kupplungsteil 5 über das Wälzlager 8 am äußeren Kupplungsteil 4 abrollt. Am inneren Kupplungsteil 5 ist an der dem äußeren Kupplungsteil 4 bzw. dem Wälzlager 8 zugewandten Oberfläche ein Steg 19 ausgeformt, an dem das Fliehgewicht 10 angelenkt ist. Es besteht damit die Möglichkeit, dass das Fliehgewicht 10 eine relativ einfache Geometrie aufweisen kann. Selbstverständlich besteht auch die Möglichkeit, dass dieser Steg 19 eine geringere Höhenabmessung aufweist, sodass also das Fliehgewicht 10 nicht am Steg 19 sondern darunter liegend am inneren Kupplungsteil 5 angelenkt ist. In diesem Fall kann das Fliehgewicht 10 im Bereich des Steges 19 eine größere Breite aufweisen als in den Bereichen unterhalb dieses Steges 19. Es wird mit dieser Ausführungsvariante erreicht, dass das Fliehgewicht 10 unterhalb der vorbestimmbaren Drehzahl, ab der sich das Fliehgewicht 10 nach außen bewegt, auch eine radiale Abstützung an dem Übergangsbereich zu dem Steg 19 erfährt.

Die rollenförmigen Wälzkörper 9 weisen eine größere Breite in axialer Richtung auf als die Breite des Steges 19 in dieser Richtung, sodass also diese Wälzkörper 9 über den Steg 19 vorragen. Es besteht dabei die Möglichkeit, dass diese Wälzkörper 9 einseitig über den Steg 19 vorragen - in axialer Richtung betrachtet - oder beidseitig. Je nachdem können einseitig oder beidseitig derartige Fliehgewichte 10, 11 (Fig. 2) angeordnet werden, womit auch die ausgeübte Reibkraft entsprechend variiert werden kann. Durch den Überstand der Wälzkörpern 9 über den Steg 19 gelangt das Fliehgewicht 10 in Eingriff mit den Wälzkörpern 9 und wird somit die voranstehend beschriebene Beschleunigung bzw. Angleichung der Drehzahlen ermöglicht.

In der einfachsten Ausführungsvariante des Fliehgewichts 10 ist eine in Richtung auf die Wälzkörper 9 gerichtete Oberfläche 20 des Fliehgewichtes 10 mit einer Rundung versehen, welche zumindest annähernd der Rundung des Steges 20 in diesem Bereich angepasst ist, wie dies in Fig. 4 strichliert dargestellt ist.

In einer bevorzugten Ausführungsvariante weist das Fliehgewicht 10 jedoch eine Bremsrampe 21 auf, wobei ein Mittenbereich 22 des Fliehgewichtes 10 mit einer Erhöhung 23 versehen ist. Auch diese Bremsrampe 22 ist bevorzugt mit einer Rundung versehen, die jedoch einen größeren Radius aufweisen kann als die Rundung des Steges 19 in diesem Bereich. Über diese Erhöhung 23 wird es möglich, dass das Fliehgewicht 10 tiefer in das Wälzlager 8, insbesondere zwischen die Wälzkörper 9 wie dies aus Fig. 4 ersichtlich ist, eingreift, wodurch die Wirkung während des Drehzahlangleichs erhöht werden kann.

Diese Erhöhung 23, d.h. die Bremsrampe 21, kann sich über die gesamte Breite des Fliehgewichtes 10 - in axialer Richtung gesehen - erstrecken, oder aber auch nur über einen Teilbereich derselben.

Die Bremswirkung des Fliehgewichtes 10 kann allgemein nicht nur über die Ausbildung der Bremsrampe 21 an sich eingestellt werden, sondern auch über die Neigung dieser Bremsrampe 21, d.h. einer Höhe 24 der Erhöhung 23, wobei hier die maximale Höhe 24 angesprochen ist und damit die Überhöhung gegenüber der voranstehend beschriebenen einfachsten Ausführungsvariante des Fliehgewichtes gemeint ist. Darüber hinaus besteht auch die Möglichkeit, die Wirkung über das Gewicht dieser Fliehgewichte 10 selbst einzustellen. Beispielsweise können diese Faktoren so abgestimmt sein, dass eine Zuschaltung des Aggregates zur angetriebenen Maschine bzw. eines entsprechenden Nebenaggregates bei einer Drehzahl ab 1500 U/min erfolgt.

Diese Höhe 24 kann beispielsweise einen maximalen Wert von 5 mm aufweisen.

Sofern sich die Bremsrampe 21 nicht über die gesamte Breite des Fliehgewichtes 10 in axialer Richtung erstreckt, kann eine entsprechende Absetzung ausgebildet sein, bspw. der Übergang zur strichlierten Linie in Fig. 4 im Fliehgewicht 10. In diesem Fall ist die Höhe 24 die maximale Höhe dieser Absetzung.

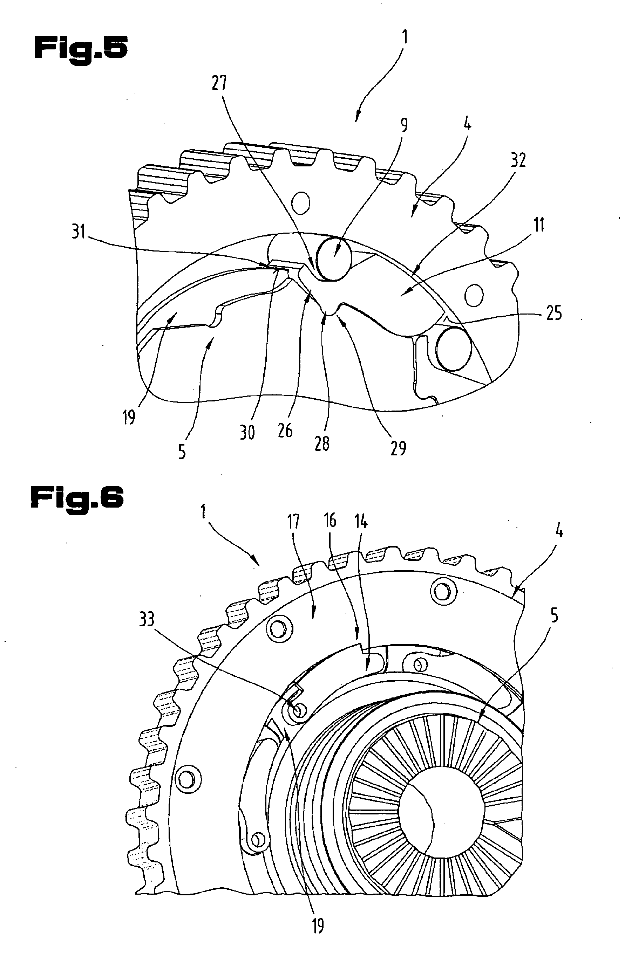

Fig. 5 zeigt ein Detail der Fliehkraftkupplung 1 im Bereich des Fliehgewichtes 11 nach den Fig. 1 und 2. Zum Unterschied zum Fliehgewicht 10 nach Fig. 4 ist das Fliehgewicht 11 nur teilweise zwischen dem Wälzkörper 9 und dem inneren Kupplungsteil 5 angeordnet, der überwiegende Teil dieses Fliehgewichtes 11 ist zwischen dem äußeren und dem inneren Kupplungsteil 4, 5 angeordnet, sodass dieses Fliehgewicht 11 mit einer unteren, auf den inneren Kupplungsteil 5 gerichteten Oberfläche 25 des äußeren Kupplungsteils 4 zusammenwirken kann. An einem Endbereich 26 weist dieses Fliehgewicht 11 eine Ausnehmung 27 auf, in der der Wälzkörper 9 angeordnet ist. Diese Ausnehmung 27 kann dazu zumindest annähernd halbkreisförmig ausgebildet sein.

Zumindest annähernd dieser Ausnehmung 27 in radialer Richtung gegenüberliegend ist ein nockenartiger Vorsprung 28 vorgesehen, der sich in Richtung auf den inneren Kupplungsteil 5 erstreckt. Der innere Kupplungsteil 5 hat dazu eine entsprechende Ausnehmung 29 zur Aufnahme dieses Vorsprunges 28, wodurch die drehbewegliche Lagerung dieses Fliehgewichtes 11 erreicht wird, zum Unterschied zur drehbeweglichen Lagerung des Fliehgewichtes 10 mittels eines Bolzens.

Des Weiteren weist das Fliehgewicht 11 an einer unteren, dem inneren Kupplungsteil 5 zugewandten Oberfläche 30 eine Nut 31 auf. In diese Nut 31 greift der Steg 19 des inneren Kupplungsteils 5 ein, sodass das Fliehgewicht 11 in axialer Richtung geführt ist. Darüber hinaus weist der innere Kupplungsteil 5 neben dem Steg 19 - in axialer Richtung betrachtet - eine Oberflächenkontur auf, die zumindest annähernd der Oberflächenkontur des Fliehgewichtes 11 in diesem Bereich folgt. Es werden damit entsprechende Anlagenflächen für das Fliehgewicht 11 geschaffen, insbesondere Anschlagflächen, um die Verschwenkbarkeit des Fliehgewichtes 11 innerhalb gewisser Grenzen zu beschränken.

Jene Oberfläche des Fliehgewichtes 11, welche in Richtung auf den äußeren Kupplungsteil 4 weist, ist als Bremsfläche 32 ausgebildet und weist dazu zumindest annähernd eine Rundung auf, die der Rundung des äußeren Kupplungsteils 4 in diesem Bereich entspricht, um damit eine möglichst großflächige Anlage an den äußeren Kupplungsteil 4 zu ermöglichen. Über diese Bremsfläche 32, insbesondere auch die Größe dieser Bremsfläche 32, die abhängig von der Baugruppengröße beispielsweise ausgewählt sein kann aus einem Bereich mit einer unteren Grenze von 10 mm² und einer oberen Grenze von 300 mm², kann ebenfalls eine Drehzahlanpassung zwischen den beiden Kupplungsteilen 4, 5 erzielt werden.

Bevorzugt werden diese Fliehgewichte 11 zusammen mit der Sperrklinke 14 angeordnet wenn zwischen den beiden Kupplungsteilen 4, 5, insbesondere zur Verzahnung des äußeren Kupplungsteils 4, eine bestimmte Phasenbeziehung vorhanden sein muss, wie dies bspw. im Falle der Ausbildung der Fliehkraftkupplung 1 für eine Ausgleichswelle der Fall ist. Dazu können diese Fliehgewichte 11,ebenso wie die Sperrklinke 14, mit einem anderen Gewicht ausgeführt sein als die Fliehgewichte 10, bspw. können diese Fliehgewichte 11 ein Gewicht aufweisen, das maximal 200 % des Gewichts der Fliehgewichte 10 beträgt. Dadurch bewegen sich diese Fliehgewichte 11 bzw. die Sperrklinke 14 bei anderen Drehzahlen nach außen, sodass durch entsprechende Auslegung bzw. entsprechende Grundstellung währen der Montage der Kupplung bzw. der Anordnung zu den weiteren Bauteilen der Maschine eine bestimmte Stellung des Kurbelwellenantriebes zur Verzahnung des Kupplungskörpers 4 erreicht werden kann. Dies kann dabei in Kombination mit dem Mitnehmerelement 17 erfolgen, insbesondere der relativen Stellung der Ausnehmung 15 bzw. der Hinterschneidung 16 für die Sperrklinke 14 (Fig. 2 bzw. Fig. 3).

Es sei an dieser Stelle erwähnt, dass im Rahmen der Erfindung von den Fliehgewichten 10, 11 nur die Fliehgewichte 10 oder nur die Fliehgewichte 11 eingesetzt werden können.

Bei Verringerung der Drehzahl kehren die Fliehgewichte 10, 11 automatisch in ihre Ausgangslage zurück, wodurch eine Entkupplung der Bauteile der Fliehkraftkupplung 1 erfolgt. Um diese Rückstellung zu vereinfachen bzw. zu verbessern, ist es im Rahmen der Erfindung möglich, die Fliehgewichte 10, 11 vorzuspannen, beispielsweise mittels einem Federring oder einem O-Ring. Es ist damit auch möglich, den Drehzahlbereich bzw. die Zuschaltdrehzahl, insbesondere auch im Zusammenhang mit voranstehend genannten Faktoren, über die Vorspannkraft, beispielsweise die gewählte Federkraft einzustellen, bei der die Zuschaltung des weiteren Aggregates erfolgt.

Neben der Beschleunigung über das Zusammenwirken der Fliehgewichte 10, 11 mit den Wälzkörpern 9 besteht auch die Möglichkeit, dass diese zumindest teilweise durch eine Anlage die Fliehgewichte 10, 11 an das Mitnehmerelement 17 durchgeführt wird.

Durch die Fliehgewichte 11 kann eine Stellungsabsicherung durch abgebremste reduzierte Drehzahldifferenz erreicht werden.

Es sei an dieser Stelle angemerkt, dass die in den Fig. 1 und 2 gezeigte Anzahl an Fliehgewichten 10, 11 nicht beschränkend für die Erfindung ist, sondern diese Anzahl durchaus im Rahmen der Erfindung variieren kann. Des Weiteren kann auch die Größe der Fliehgewichte 10, 11 von der dargestellten Größe variieren bzw. kann die relative Größe bezogen auf die Baugröße der Fliehkraftkupplung 1 ebenfalls variieren. Beispielsweise können die Fliehgewichte 10, 11 eine relative Längenausdehnung in Umfangsrichtung aufweisen, die ausgewählt ist aus einem Bereich mit einer unteren Grenze von 10 ° und einer oberen Grenze von 180 °, bezogen auf den Umfang der Fliehkraftkupplung 1, insbesondere die Länge des Umfanges des Steges 19.

Es ist weiters möglich, dass die Wälzkörper 9 wie dargestellt ohne zusätzliche Führung in den Kupplungsteilen 4, 5 angeordnet sind. Andererseits besteht die Möglichkeit, dass in zumindest einem der beiden Kupplungsteile 4, 5, beispielsweise dem äußeren Kupplungsteil 4, zumindest annähernd halbkreisförmige Vertiefungen vorgesehen sind für die teilweise Aufnahme dieser Wälzkörper 9.

Fig. 6 zeigt ein Detail der Fliehkraftkupplung 1 im Bereich der Sperrklinke 14. Wie bereits voranstehend ausgeführt, wird zur mechanischen Kupplung der Kupplungsteile 4, 5 bevorzugt eine Sperrklinke 14 als Sperrelement verwendet, die in die Hinterschneidung 16 im scheibenförmigen Mitnehmerelement 17 bzw. die Ausnehmung 15 (Fig. 3) eingreift. Diese Sperrklinke 14 ist dabei ebenfalls am inneren Kupplungsteil 5, beispielsweise dem Steg 19, über ein Schwenklager 33 angelenkt, sodass dieses ebenfalls mittels Fliehkraft in die Sperrstellung oder aus der Sperrstellung verbracht werden kann in Abhängigkeit von der jeweils gewünschten Drehzahl. Es erfolgt damit die Verriegelung der beiden Kupplungsteile 4, 5 drehzahlabhängig und automatisch. Zur leichteren Rückführung dieser Sperrklinke 14 kann diese ebenfalls wie die Fliehgewichte 10, 11 vorgespannt sein. Des Weiteren können auch mehr als eine Sperrklinke 14 über den Umfang der Fliehkraftkupplung 1 verteilt angeordnet werden. Diese Sperrklinke 14 ist hinsichtlich ihres Gewichtes so abgestimmt, dass die Kupplung, d.h. die Verriegelung, erst erfolgt, wenn die Drehzahlen der beiden Kupplungsteile 4, 5 zumindest annähernd gleich sind.

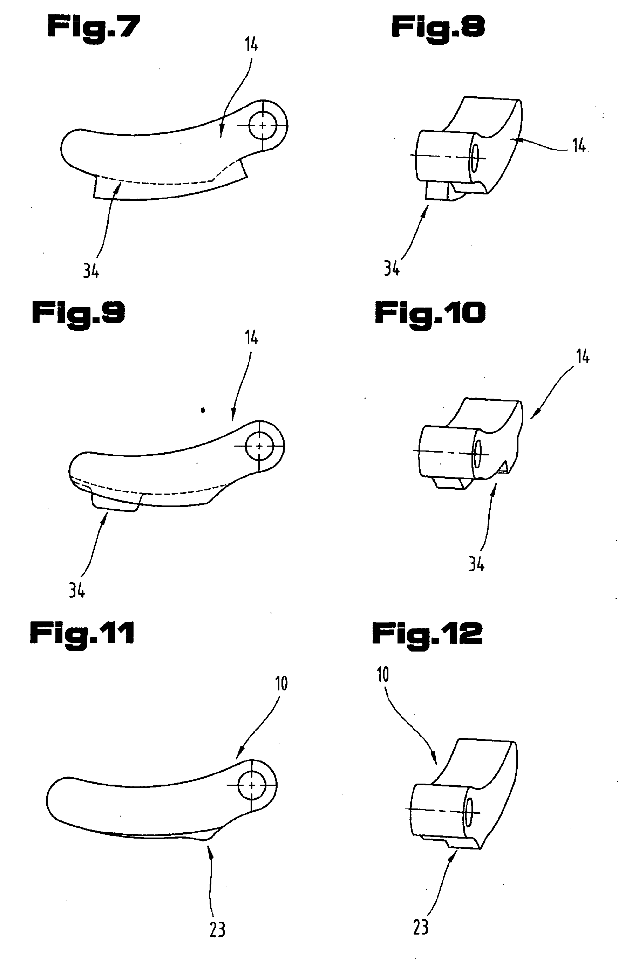

Die Fig. 7 bis 10 zeigen verschiedene Ausführungsvarianten von Sperrklinken 14 jeweils in Seitenansicht und in perspektivischer Darstellung.

Nach der Ausführungsvariante nach den Fig. 7 und 8 ist die Sperrklinke 14 an der Rückseite, d.h. jener Seite die dem Steg 19 (Fig. 6) zugewandt ist, zumindest annähernd gleich bzgl. des Querschnittes ausgebildet wie das Fliehgewicht 10 in seiner einfachsten Ausführungsform. In diesem Bereich kann die Sperrklinke an den Wälzkörpern 9 (Fig. 2) abgleiten. Auf der gegenüberliegenden nach außen gerichteten Seite (in Einbaulage betrachtet) weist die Sperrklinke 14 einen Verriegelungsvorsprung 34 für die Verriegelung mit dem äußeren Kupplungsteil 4 (z.B. Fig. 6) auf. Dieser Verriegelungsvorsprung 34 erstreckt sich dabei über einen Großteil der Länge der Sperrklinke 14.

Zum Unterschied dazu zeigt die Ausführungsvariante nach den Fig. 9 und 10 eine Variante bei der dieser Verriegelungsvorsprung 34 deutlich kürzer ausgebildet ist. Zudem sind die Kanten dieses Verriegelungsvorsprunges 34 mit Rundungen versehen. Insbesondere ist diese Ausführungsvariante des Verriegelungsvorsprunges 34 dafür vorgesehen, um in die Ausnehmung 15 (Fig. 3) einzugreifen.

Bei beiden Ausführungsvarianten ist eine Breite des Fliehgewichtes (in axialer Richtung betrachtet) größer als eine Breite des Verriegelungsvorsprunges 34 in derselben Richtung. Insbesondere kann diese Breite des Verriegelungsvorsprunges 34 an die Breite des Mitnehmerelementes 17 (Fig. 1, 3) in axialer Richtung angepasst sein.

Es besteht im Rahmen der Erfindung jedoch auch die Möglichkeit, die Sperrklinken 14 ähnlich zu den Fliehgewichten 10, 11 hinsichtlich ihrer Geometrie auszubilden, wobei die Erhöhung 23, welche sich bei dieser Ausführungsvariante des Fliehgewichtes 10 ebenfalls nur über einen Teilbereich der Breite erstreckt, als Verriegelungsvorsprung 34 ausgebildet sein kann, der in eine entsprechende Ausnehmung 15 des Mitnehmerelementes 17 (Fig. 3) eingreifen kann.

In den Fig. 11 und 12 ist das Fliehgewicht 10 nochmals für sich alleine dargestellt.

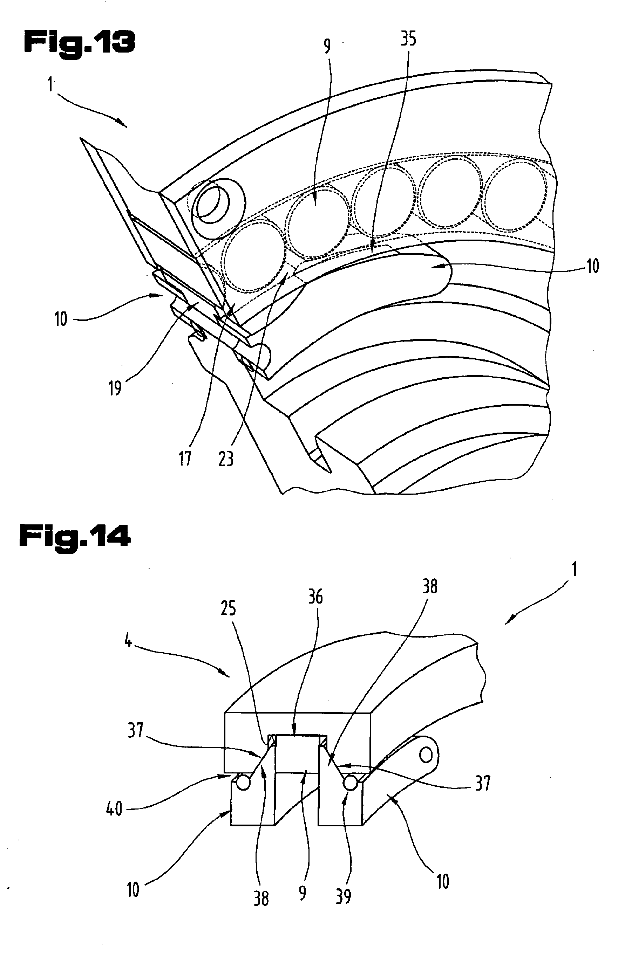

In Fig. 13 ist ein Detail aus einer Ausführungsvariante der Fliehkraftkupplung 1 im Bereich der Fliehgewichte 10 dargestellt. Diese Fliehgewichte 10 weisen wiederum die Erhöhung 23 im Bereich der Wälzkörper 9 auf. Nach außen hin (seitlich) ist diese Erhöhung 23 mit einer Abflachung 35 versehen, wobei oberhalb dieser Abflachung 35 der Mitnehmerring, d.h. das Mitnehmerelement 17, angeordnet ist. Es wird damit eine kompakte Bauweise der Fliehkraftkupplung 1 ermöglicht.

Des Weiteren ist in Fig. 13 angedeutet, dass beidseits des Steges 19 Fliehgewichte 10 angeordnet werden können (in axialer Richtung betrachtet).

Fig. 14 zeigt schließlich eine Variante der Fliehkraftkupplung 1 im Ausschnitt, bei der wiederum beidseits die Fliehgewichte 10 angeordnet sind. Der äußere Kupplungsteil 4 weist dabei an seiner unteren Oberfläche 25 eine Nut 36 auf, in der die Wälzkörper 9 angeordnet sind. Diese Nut 36 erstreckt sich dabei in Umfangsrichtung.

Nutseitenwände 37 verlaufen schräg nach außen. Die Fliehgewichte 10 sind in diesem Bereich mit Rampen 38 versehen, die zumindest annähernd eine Neigung aufweisen, deren Absolutwert jenem der Nutseitenwände 37 entspricht. Es wird damit aufgrund der Fliehkraft ein Reibschluss über die Rampen 38 und die schrägen Nutseitenwände 37 für die Ausbildung eines Reibkonuses ermöglicht. An der den Rampen gegenüberliegenden Seite der Fliehgewichte 10 folgt eine Reibwirkung mit den Wälzkörpern 9.

Wie weiters aus Fig. 14 ersichtlich ist, können die Fliehgewichte 10 in Umfangsrichtung unterhalb der Rampen 38 eine Ausnehmung 39 aufweisen, die in diesem Beispiel zumindest annähernd halbrund ausgebildet ist, und in der ein O-Ring zur Vorspannung der Fliehgewichte 10 angeordnet werden kann.

Zusätzlich zur Reibwirkung über die Rampen 38 kann bei entsprechender geometrischer Auslegung eine Reibwirkung der Fliehgewichte 10 in einem an die Rampen 38 anschließenden Bereich 40 bei Anlage der Fliehgewichte 10 an den äußeren Kupplungsteil 4 erfolgen. Für diesen Fall müssen die Ausnehmungen 39 so tief sein, dass keine Reibwirkung über die O-Ringe erfolgt.

Bevorzugt werden zumindest einzelne Bauteile der Fliehkraftkupplung 1 aus Sinterbauteilen hergestellt, beispielsweise die Fliehgewichte 10, 11 und/oder die Sperrklinke 14.

Die Ausführungsbeispiele zeigen mögliche Ausführungsvarianten der Fliehkraftkupplung 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Ordnung halber sei abschließend darauf hingewiesen, dass zum besseren Verständnis des Aufbaus der Fliehkraftkupplung 1 diese bzw. deren Bestandteile teilweise unmaßstäblich und/oder vergrößert und/oder verkleinert dargestellt wurden.

### Bezugszeichenaufstellung

- 1: Fliehkraftkupplung
- 2: Abdeckelement
- 3: Kupplungskörper
- 4: Kupplungsteil
- 5: Kupplungsteil

- 6: Welle
- 7: Zahnrad
- 8: Wälzlager
- 9: Wälzkörper
- 10: Fliehgewicht

- 11: Fliehgewicht
- 12: Schwenklager
- 13: Schwenklager
- 14: Sperrklinke
- 15: Ausnehmung

- 16: Hinterschneidung
- 17: Mitnehmerelement
- 18: Doppelpfeil
- 19: Steg
- 20: Oberfläche

- 21: Bremsrampe
- 22: Mittenbereich
- 23: Erhöhung
- 24: Höhe
- 25: Oberfläche

- 26: Endbereich
- 27: Ausnehmung
- 28: Vorsprung
- 29: Ausnehmung
- 30: Oberfläche

- 31: Nut
- 32: Bremsfläche
- 33: Schwenklager
- 34: Verriegelungsvorsprung
- 35: Abflachung

- 36: Nut
- 37: Nutseitenwand
- 38: Rampe
- 39: Ausnehmung
- 40: Bereich

## Patentansprüche

1. Fliehkraftkupplung (1) zur Herstellung bzw. Unterbrechung einer Wirkverbindung zwischen einem Aggregat einer Maschine und einer angetriebenen Welle (6), mit einem Kupplungskörper (3), der einen äußeren Kupplungsteil (4) und einen inneren, mit der angetriebenen Welle (6) drehfest verbindbaren Kupplungsteil (5) umfasst, wobei der äußere Kupplungsteil (4) den inneren Kupplungsteil (5) zumindest teilweise umgibt, und der äußere Kupplungsteil (4) mit einer weiteren Welle zum Antrieb des Aggregats verbindbar ist, wobei am inneren Kupplungsteil (4) zumindest ein Fliehgewicht (10, 11) angeordnet ist, **dadurch gekennzeichnet, dass** zwischen dem äußeren Kupplungsteil (4) und dem inneren Kupplungsteil (5) und/oder zwischen dem äußeren Kupplungsteil (4) und zumindest teilweise dem zumindest einen Fliehgewicht (10, 11) ein Wälzlager (8) mit Wälzkörpern (9) angeordnet ist.

2. Fliehkraftkupplung (1) nach Anspruch 1, **dadurch gekennzeichnet, dass** das Fliehgewicht (10) auf einer den Wälzkörpern (9) zugewandten Oberfläche (20) eine Bremsrampe (21) aufweist.

3. Fliehkraftkupplung (1) nach Anspruch 2, **dadurch gekennzeichnet, dass** sich die Bremsrampe (21) nur über einen Teilbereich der den Wälzkörpern (9) zugewandten Oberfläche (20) erstreckt.

4. Fliehkraftkupplung (1) nach einem der Ansprüche 1 bis 3, **dadurch gekennzeichnet, dass** der äußere Kupplungsteil (4) in einer dem inneren Kupplungsteil (5) zugewandten Oberfläche eine Nut (36) mit Nutseitenwänden (37) aufweist, wobei zumindest eine Nutenseitenwand (37) zumindest in einem Abschnitt schräg nach außen verläuft, und das Fliehgewicht (10) eine zum Abschnitt komplementäre Rampe (38) aufweist, die drehzahlabhängig in Eingriff mit dem Abschnitt bringbar ist.

5. Fliehkraftkupplung (1) nach einem der Ansprüche 1 bis 4, **dadurch gekennzeichnet, dass** das Fliehgewicht (10, 11) zumindest teilweise zwischen dem inneren Kupplungsteil (5) und den Wälzkörpern (9) angeordnet ist.

6. Fliehkraftkupplung (1) nach Anspruch 5, **dadurch gekennzeichnet, dass** das Fliehgewicht (11) in einer dem inneren Kupplungsteil (5) zugewandten Oberfläche eine Nut (31) und der innere Kupplungsteil (5) einen dazu komplementären Steg (19), der in die Nut (31) eingreift, aufweisen.

7. Fliehkraftkupplung (1) nach Anspruch 5 oder 6, **dadurch gekennzeichnet, dass** das Fliehgewicht (11) eine Bremsfläche (32) aufweist, die dem äußeren Kupplungsteil (4) zugewandt ist und drehzahlabhängig in Wirkverbindung mit dem äußeren Kupplungsteil (4) bringbar ist.

8. Fliehkraftkupplung (1) nach einem der Ansprüche 1 bis 7, **dadurch gekennzeichnet, dass** das Fliehgewicht (11) auf einer dem inneren Kupplungsteil (5) zugewandten Oberfläche einen nockenartigen Vorsprung (28) aufweist und im inneren Kupplungsteil (5) zur Aufnahme des nockenartigen Vorsprunges (28) eine dazu entsprechende Ausnehmung (29) ausgebildet ist.

9. Fliehkraftkupplung (1) nach einem der Ansprüche 1 bis 8, **dadurch gekennzeichnet, dass** die Fliehgewichte (10, 11) gegen die Fliehkraft vorgespannt sind.

10. Fliehkraftkupplung (1) nach einem der Ansprüche 1 bis 9, **dadurch gekennzeichnet, dass** in axialer Richtung mehrere Fliehgewichte (10, 11) angeordnet sind.

11. Fliehkraftkupplung (1) nach einem der Ansprüche 1 bis 10, **dadurch gekennzeichnet, dass** an dem äußeren Kupplungsteil (4) ein Mitnehmerelement (17) angeordnet ist und am inneren Kupplungsteil (5) zumindest eine Sperrklinke (14) angelenkt ist, die mit dem Mitnehmerelement (17) in Eingriff bringbar ist.

12. Fliehkraftkupplung (1) nach Anspruch 11, **dadurch gekennzeichnet, dass** die Sperrklinke (14) an einer dem Mitnehmerelement (17) zugewandten Oberfläche einen Verriegelungsvorsprung (34) aufweist.

13. Fliehkraftkupplung (1) nach Anspruch 12, **dadurch gekennzeichnet, dass** die Sperrklinke (14) eine Breite aufweist und der Verriegelungsvorsprung (34) an der dem Mitnehmerelement (17) zugewandten Oberfläche der Sperrklinke (14) sich nur über einen Teilbereich der Breite der Sperrklinke (14) erstreckt.

14. Fliehkraftkupplung (1) nach einem der Ansprüche 1 bis 13, **dadurch gekennzeichnet, dass** zumindest ein Fliehgewicht (10) angeordnet ist, das mit den Wälzkörpern, und/oder dem Mitnehmerelement (17) und damit mit dem äußeren Kupplungsteil (4) drehzahlabhängig in Reibkontakt bringbar ist.

15. Fliehkraftkupplung (1) nach einem der Ansprüche 1 bis 13, **dadurch gekennzeichnet, dass** das oder die Fliehgewichte (10, 11) und/oder die Sperrklinke (14) mit einem Reibbelag versehen sind.

16. Brennkraftmaschine mit einer Kurbelwelle und mindestens einer von der Kurbelwelle angetriebenen weiteren Welle, **dadurch gekennzeichnet, dass** zwischen der Kurbelwelle und der weiteren Welle eine Fliehkraftkupplung (1) nach einem der Ansprüche 1 bis 15 angeordnet ist.
